# EUROPÄISCHE PATENTSCHRIFT

(11) **EP 3 412 942 B1**
(45) Veröffentlichungstag und Bekanntmachung des Hinweises auf die Patenterteilung: **11.03.2020**
(21) Anmeldenummer: 18168675.9
(22) Anmeldetag: 23.04.2018
(51) Int. Cl.: F16J 15/3244, F16J 15/34

(54) **RING FÜR EINE GLEITRINGDICHTUNG**
RING FOR A ROTARY SEAL
BAGUE POUR UN JOINT À BAGUE DE GLISSEMENT

(30) Priorität: 06.06.2017 DE 102017209482
(43) Veröffentlichungstag der Anmeldung: 12.12.2018
(73) Patentinhaber: AUDI AG, 85045 Ingolstadt (DE)
(72) Erfinder: Winkelmeyr, Felix, 85049 Ingolstadt (DE); Karl, Bernhard, 85080 Gaimersheim (DE); Winkelmeyr, Peter, 85057 Ingolstadt (DE)

(56) Entgegenhaltungen:
- EP-A1- 2 752 602
- EP-A1- 2 752 603
- US-A1- 2014 203 517

## Beschreibung

Die Erfindung betrifft einen Ring für eine Gleitringdichtung und eine Gleitringdichtung.

Eine Gleitringdichtung ist bspw. als Teil eines Antriebs ausgebildet, wobei als Flüssigkeit ein Kühlmittel verwendet wird. Eine Oberfläche der Gleitringdichtung wird strukturiert, um eine Leckage einer Flüssigkeit bei einer Drehung in einer ersten Richtung, aus der eine Vorwärtsbewegung einer durch den Antrieb angetriebenen Vorrichtung resultiert, zu unterbinden, weshalb eine in die Oberfläche eingebrachte Struktur als Barriere für die Flüssigkeit wirkt. Allerdings ist durch eine derartige Struktur ein Trockenlauf der Gleitringdichtung nicht zu vermeiden, weshalb aufgrund einer Pumpwirkung der Struktur bei einer Drehung in einer zweiten Richtung, aus der eine Rückwärtsbewegung der Vorrichtung resultiert, eine erhöhte Leckage zu erwarten ist. Ohne eine derartige Struktur ist eine in einem Lastenheft geforderte maximale Leckage in beiden Bewegungsrichtungen nicht gewährleistet. Ein Trockenlauf des Kühlmittels kann zu einem Ausfall der Gleitringdichtung und somit auch des bspw. als Elektromotor ausgebildeten Antriebs führen.

Ein dynamisches Druck-Schub-Lagerteil und ein Verfahren zur Fertigung desselben sind aus der Druckschrift EP 1 517 057 A2 bekannt. Dabei umfasst dieses Lagerteil einen äußeren und einen inneren Bereich, die beide Strukturierungen aufweisen.

Aus der Druckschrift US 5 806 987 A ist ein hydrodynamisches Dichtungslager mit einem Strukturierungsabschnitt bekannt.

Ein dynamisches druckbasiertes Schublager ist in der Druckschrift US 2002/122610 A1 beschrieben. Hierbei sind auf einer Oberfläche des Schublagers Rillen ausgebildet. Ähnliche Ringe sind auch aus US 2014/203517 A1, EP 2 752 603 A1, und EP 2 752 602 A1 bekannt.

Vor diesem Hintergrund war es eine Aufgabe, eine Struktur einer Gleitringdichtung zu verbessern.

Diese Aufgabe wird mit einem Ring und einer Gleitringdichtung mit den Merkmalen der unabhängigen Patentansprüche gelöst. Ausführungsformen des Rings und der Gleitringdichtung gehen aus den abhängigen Patentansprüchen und der Beschreibung hervor.

Der erfindungsgemäße Ring ist für eine Gleitringdichtung vorgesehen und/oder als Teil einer Gleitringdichtung ausgebildet. Der Ring weist eine Wirkfläche auf, wobei die Wirkfläche als erste Zone eine Innenzone mit einer inneren Oberfläche und als zweite Zone eine Außenzone mit einer äußeren Oberfläche aufweist. Dabei umschließt die Außenzone die Innenzone koaxial, wobei jede der beiden Oberflächen eine mit einem Laser bereitgestellte und/oder strukturierte Struktur aufweist. Dabei ist mit dem Laser bzw. durch Laserbearbeitung in die Oberfläche der Innenzone eine erste Struktur und in die Oberfläche der Außenzone eine zweite Struktur eingebracht, wobei sich die Strukturen der beiden Zonen in Ausgestaltung voneinander unterscheiden.

Bei einem Betrieb des Rings sind eine erste Drehrichtung und eine zweite Drehrichtung vorgesehen, die zueinander entgegengesetzt sind. Falls der Ring in der ersten Drehrichtung gedreht wird, wird eine Flüssigkeit radial von innen nach außen gefördert. Die Wirkfläche ist auch als Reibfläche ausgestaltet und/oder zu bezeichnen, wobei eine jeweilige Oberfläche und/oder Zone in Ausgestaltung ebenfalls als Reibfläche ausgebildet und/oder zu bezeichnen ist.

Dabei ist die Innenzone als erste Zone der Wirkfläche bzw. Reibfläche des Rings dazu ausgebildet ist, in der ersten Drehrichtung für die Flüssigkeit eine Pumpwirkung zu erzeugen. In diesem Fall bildet sich auf der Wirkfläche des Rings, die auch als Lauffläche ausgebildet und/oder zu bezeichnen ist, ein Flüssigkeitsfilm, wodurch eine Reibung sowie ein Verschleiß der Wirkfläche minimiert wird.

Die Außenzone als zweite Zone der Wirkfläche des Rings ist in der ersten Drehrichtung dagegen dazu ausgebildet ist, für die Flüssigkeit eine Barrierewirkung zu erzeugen, wodurch sich ergibt, dass keine Flüssigkeit austritt.

Falls der Ring in der zweiten Drehrichtung gedreht wird, wird die Flüssigkeit radial von außen nach innen gefördert. Die Außenzone als zweite Zone der Wirkfläche des Rings ist in der zweiten Drehrichtung dazu ausgebildet, für die Flüssigkeit eine Pumpwirkung zu erzeugen, wohingegen die Innenzone als erste Zone der Wirkfläche des Rings dazu ausgebildet ist, für die Flüssigkeit eine Barrierewirkung zu erzeugen. Aufgrund der Pumpwirkung wird eine drehrichtungsabhängige Förderung und somit ein Transport der Flüssigkeit durch eine jeweilige Zone verstärkt bzw. begünstigt, wobei bspw. ein Durchsatz und/oder eine Strömung der Flüssigkeit erhöht wird. Im Unterschied hierzu wird aufgrund der Barrierewirkung eine drehrichtungsabhängige Förderung der Flüssigkeit verringert und/oder unterbunden, wobei bspw. der Durchsatz und/oder die Strömung der Flüssigkeit reduziert und/oder gestoppt wird.

Der Ring ist für eine Gleitringdichtung vorgesehen, die als Teil eines Antriebs, bspw. einer Elektromaschine, für eine Vorrichtung, bspw. eines Fahrzeugs, ausgebildet ist.

Dabei ist der Ring abhängig von einem Aufbau des Antriebs in der ersten Drehrichtung drehbar bzw. zu drehen, wenn die Vorrichtung vorwärts bewegt wird, und weiterhin in der zweiten Drehrichtung drehbar bzw. zu drehen, wenn die Vorrichtung rückwärts bewegt wird. In der Regel wird eine als Fahrzeug ausgebildete Vorrichtung meistens vorwärts bewegt. Es ist jedoch je nach Aufbau des Antriebs auch möglich, dass der Ring in der ersten Drehrichtung drehbar ist, wenn die Vorrichtung rückwärts bewegt wird, und dass der Ring in der zweiten Drehrichtung drehbar ist, wenn die Vorrichtung vorwärts bewegt wird.

Weiterhin ist definitionsgemäß vorgesehen, dass eine erste maximale Drehzahl in der ersten Drehrichtung größer als eine zweite maximale Drehzahl in der zweiten Drehrichtung ist. In Ausgestaltung wird die erste maximale Drehzahl erreicht, wenn die Vorrichtung vorwärts bewegt wird. Dagegen wird für den Fall, dass die Vorrichtung rückwärts bewegt wird, die zweite maximale Drehzahl erreicht. Drehrichtungen des Rings sind mit Richtungen einer Bewegung der Vorrichtung korreliert. Dabei wird die Vorrichtung in der Regel öfters und intensiver vorwärts als rückwärts bewegt. Die mit dem Laser bereitgestellten Strukturen sind an Richtungen der Bewegung der Vorrichtung angepasst.

Der Ring ist entweder als Gleitring oder als Dichtring der Gleitringdichtung ausgebildet und besteht bspw. aus Graphit.

Die erfindungsgemäße Gleitringdichtung weist mindestens eine Ausführungsform des erfindungsgemäßen Rings auf.

In der Regel weist die Gleitringdichtung zwei Ringe auf, wobei mindestens einer der beiden als Ausführungsform des erfindungsgemäßen Rings ausgebildet ist.

Dabei ist es möglich, dass beide Ringe, wobei ein Ring als Gleitring und der andere als Gegenring ausgebildet ist, jeweils eine Wirkfläche aufweisen, die einander zugewandt sind und bei einem Betrieb der Gleitringdichtung zusammenwirken. Hierbei ist in der Regel die Wirkfläche eines der beiden Ringe mit dem Laser strukturiert, weshalb die Innenzone und Außenzone der Wirkfläche lediglich eines Rings mit dem Laser strukturiert sind. Es ist auch möglich, dass jeweils die Innenzone und Außenzone der Wirkflächen beider Ringe mit dem Laser strukturiert sind. Es ist möglich, dass sich zwischen Wirkflächen der beiden Ringe ein Flüssigkeitsfilm bildet, wenn die Pumpwirkung erzeugt wird, wodurch die Reibung und der Verschleiß zwischen den Ringen minimiert werden. Falls die Barrierewirkung erzeugt wird, wird ein Austritt der Flüssigkeit unterbunden.

Bei der Gleitringdichtung ist mindestens einer der beiden Ringe an einer Welle eines Antriebs anordenbar und/oder anzuordnen, wobei die Gleitringdichtung dazu ausgebildet ist, die Welle abzudichten. Es ist weiterhin denkbar, mit einer Ausführungsform der Gleitringdichtung eine Welle zu lagern.

Der vorgestellte Ring bzw. der mindestens eine Ring der vorgestellten Gleitringdichtung weist einen Grundkörper auf, der in Ausgestaltung eine Form eines Hohlzylinders mit zwei ringförmigen axial orientierten Außenwänden aufweist, wobei eine dieser beiden ringförmigen Außenwände die Wirkfläche des Rings aufweist. Die demnach ringförmige Wirkfläche ist weiterhin in eine ebenfalls ringförmige Innenzone sowie in eine ringförmige Außenzone aufgeteilt. Dabei weist die Außenwand und somit die Wirkfläche einen inneren Radius und einen äußeren Radius auf, der die Wirkfläche begrenzt. Die Innenzone und die Außenzone sind durch einen Kreis voneinander getrennt und/oder stoßen entlang dieses mittleren Kreises unmittelbar aufeinander. Dabei weist der mittlere Kreis einen mittleren Radius auf, der größer als der innere Radius und kleiner als der äußere Radius ist. Demnach ist die kreisförmige Innenzone der Wirkfläche durch den inneren Radius und den mittleren Radius begrenzt, wohingegen die kreisförmige Außenzone der Wirkfläche durch den mittleren Radius und den äußeren Radius begrenzt ist. In möglicher Ausgestaltung entspricht der mittlere Radius zumindest einem Mittelwert aus dem inneren und äußeren Radius, weshalb es möglich ist, dass der mittlere Radius dem Mittelwert entspricht oder größer ist.

Bei einem Betrieb der Gleitringdichtung wird der Ring entweder in der ersten oder in der zweiten Drehrichtung gedreht, wobei eine der beiden Drehrichtungen bspw. im Uhrzeigersinn und die andere entgegen dem Uhrzeigersinn orientiert ist. Die als Teil eines Antriebs für eine Vorrichtung ausgebildete Gleitringdichtung ist in Ausgestaltung dazu ausgebildet, eine drehbare Welle des Antriebs für die Flüssigkeit abzudichten, wobei die Flüssigkeit bspw. als ein Kühlmittel und/oder Schmiermittel für den Antrieb und/oder die Welle ausgebildet ist.

Weiterhin ist beim Betrieb der Gleitringdichtung vorgesehen, dass die Flüssigkeit in einer der beiden Drehrichtungen von innen nach außen und in der anderen der beiden Drehrichtungen von außen nach innen gefördert bzw. transportiert wird. Je nach Drehrichtung wird die Flüssigkeit in radialer Richtung zunächst zu einer der beiden Zonen, d. h. der Innenzone oder der Außenzone gefördert. Dabei ist in beiden Drehrichtungen vorgesehen, dass eine der beiden Zonen, d. h. die Innenzone oder die Außenzone, zu der die Flüssigkeit zuerst gefördert wird, für die Flüssigkeit die Pumpwirkung erzeugt, wohingegen die andere der beiden Zonen, d. h. die Außenzone oder die Innenzone der Wirkfläche, für die Flüssigkeit die Barrierewirkung erzeugt. Demnach wird für die Flüssigkeit unabhängig von der Drehrichtung von einer der beiden Zonen zunächst die Pumpwirkung und von der anderen der beiden Zonen die Barrierewirkung erzeugt.

Bei dem Ring ist vorgesehen, dass die Oberflächen beider Zonen der Wirkfläche, d. h. die Oberfläche der Innenzone und die Oberfläche der Außenzone mit dem Laser und/oder durch eine Laserbearbeitung strukturiert sind. Somit ist es möglich, auf den Oberflächen feinere Strukturen bereitzustellen, wodurch eine Reibung, üblicherweise eine Reibung zwischen zwei Ringen der Gleitringdichtung, die bei deren Betrieb zusammenwirken, minimiert wird, ohne dass aus der Gleitringdichtung die als Kühlmittel ausgebildete Flüssigkeit bzw. Kühlflüssigkeit austreten kann.

Dabei sind die für beide Zonen, d. h. die Innenzone und die Außenzone, mit dem Laser bereitgestellten Strukturen derart aufgeteilt, dass sie in beiden Drehrichtungen vorhanden sind und somit wirken. Je nach Definition wird in der ersten Drehrichtung die als Kühlmittel ausgebildete Flüssigkeit ausgehend von dem inneren Radius der Innenzone bis zum mittleren Radius der Wirkfläche des Rings gepumpt, wodurch ein Trockenlauf der Wirkfläche verhindert wird. Ab dem mittleren Radius zum äußeren Radius, die die Außenzone begrenzen, wirkt die Wirkfläche als Barriere gegen Leckage der Flüssigkeit. Dagegen ist bei der zweiten Drehrichtung vorgesehen, dass die Oberfläche der Innenzone der Wirkfläche als Barriere für die Flüssigkeit wirkt und somit eine Leckage unterbindet.

Dabei ist in Ausgestaltung vorgesehen, dass in der ersten Drehrichtung eine erste maximale Drehzahl erreicht wird, die größer als eine zweite maximale Drehzahl ist, die in der zweiten Drehrichtung erreicht wird. Weiterhin ist es möglich, dass der Ring öfters und über längere Zeiträume in der ersten Drehrichtung und seltener sowie über kürzere Zeiträume in der zweiten Drehrichtung gedreht wird. Entsprechend wird die Vorrichtung häufiger vorwärts als rückwärts bewegt.

Mit dem Antrieb, der mindestens eine Ausführungsform der vorgestellten Gleitringdichtung aufweist, ist die Vorrichtung, bspw. ein Fahrzeug, in zwei Richtungen, d. h. entweder vorwärts oder rückwärts, bewegbar. Dabei wird für den Antrieb üblicherweise bei der Bewegung der Vorrichtung in Vorwärtsrichtung die erste größere maximale Drehzahl erreicht, wohingegen bei der Bewegung der Vorrichtung in Rückwärtsrichtung mit dem Antrieb die zweite geringere maximale Drehzahl erreicht wird. Falls die Vorrichtung als Fahrzeug ausgebildet ist, fährt dieses vorwärts, wenn sich der Ring in Ausgestaltung in der ersten Drehrichtung dreht, und rückwärts, wenn sich der Ring in Ausgestaltung in der zweiten Drehrichtung dreht. Dabei ist vorgesehen, dass die bspw. als Fahrzeug ausgebildete Vorrichtung häufiger und länger vorwärts als rückwärts fährt. Außerdem wird bei Fahrten vorwärts eine höhere Geschwindigkeit als bei Fahrten rückwärts erreicht. Ferner dauern Fahrten vorwärts länger als Fahrten rückwärts an. Bei einer Fahrt rückwärts dient die mit dem Laser strukturierte Oberfläche der Innenzone definitionsgemäß in der zweiten Drehrichtung als Barriere für die Flüssigkeit und unterbindet eine Leckage. Weiterhin ist ein Trockenlauf des Rings bei der Fahrt der Vorrichtung rückwärts nicht zu erwarten, da die Vorrichtung seltener, kurzzeitiger und mit geringerer Geschwindigkeit rückwärts als vorwärts bewegt wird.

Durch die mit dem Laser und/oder durch Laserbearbeitung erzeugte Strukturierung der Oberfläche der Innenzone und der Oberfläche der Außenzone der Wirkfläche des Rings ist diese Wirkfläche optimal zwischen Leckage und Schmierung in beiden Drehrichtungen aufgeteilt. Somit ist kein Ausfall der Gleitringdichtung durch Trockenlauf sowie des Antriebs durch Leckage der als Kühlmittel ausgebildeten Flüssigkeit zu erwarten.

Durch die spezielle mit dem Laser bereitgestellte Strukturierung der Wirkfläche, die nunmehr in die Innenzone und die Außenzone aufgeteilt ist, ist die Gleitringdichtung bezüglich einer Leckage und einer Vermeidung des Trockenlaufs optimal eingestellt.

Es versteht sich, dass die voranstehend genannten und die nachstehend noch zu erläuternden Merkmale nicht nur in der jeweils angegebenen Kombination sondern auch in anderen Kombinationen oder in Alleinstellung verwendbar sind, ohne den Rahmen der vorliegenden Erfindung zu verlassen.

Die Erfindung ist anhand einer Ausführungsform in den Zeichnungen schematisch dargestellt und wird unter Bezugnahme auf die Zeichnungen schematisch und ausführlich beschrieben.

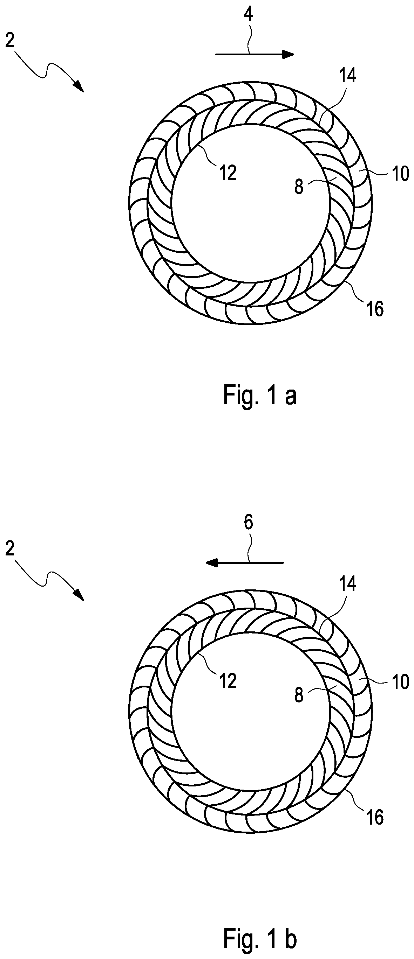

Figur 1 zeigt in schematischer Darstellung ein Detail einer Ausführungsform des erfindungsgemäßen Rings in unterschiedlichen Betriebssituationen.

Die Figuren werden zusammenhängend und übergreifend beschrieben, Zeichenkomponenten sind dieselben Bezugsziffern zugeordnet.

Figur 1a zeigt in schematischer Darstellung eine Wirkfläche 2 eines Rings einer Gleitringdichtung in einer ersten Betriebssituation, in der der Ring in einer ersten Drehrichtung, hier im Uhrzeigersinn gedreht wird, was durch einen Pfeil 4 angedeutet wird. Dagegen zeigt Figur 1b die Wirkfläche 2 des Rings in einer zweiten Drehrichtung, hier entgegen dem Uhrzeigersinn, die in Figur 1b durch einen Pfeil 6 angedeutet ist.

Dabei ist die hier kreisringförmige Wirkfläche 2 des Rings in zwei zueinander koaxial angeordnete kreisringförmige Zonen, nämlich eine Innenzone 8 und eine Außenzone 10 aufgeteilt. Jede Zone, d. h. die Innenzone 8 und die Außenzone 10, weist eine Oberfläche mit einer Struktur auf, die jeweils durch einen Laser und/oder durch Laserbearbeitung bereitgestellt und somit strukturiert ist, wobei die für die jeweilige Zone vorgesehene Struktur in deren Oberfläche mit einem Laser eingebracht und somit bereitgestellt ist.

Weiterhin ist hier die Innenzone 8 durch einen inneren Kreis 12 mit einem inneren Radius und einen mittleren Kreis 14 mit einem mittleren Radius begrenzt. Die Außenzone 10 ist ebenfalls durch den mittleren Kreis 14 mit dem mittleren Radius und durch einen äußeren Kreis 16 mit einem äußeren Radius begrenzt. Die Innenzone 8 und die Außenzone 10 grenzen demnach an dem mittleren Kreis 14 aneinander und/oder sind je nach Definition durch den mittleren Kreis 14 voneinander getrennt. Bei der hier vorgestellten Ausführungsform des Rings ist vorgesehen, dass der mittlere Radius des mittleren Kreises 14 größer als ein Mittelwert aus dem inneren Radius des inneren Kreises 12 und dem äußeren Radius des äußeren Kreises 16 ist.

Der Ring, dessen Wirkfläche 2 in den Figuren 1a und 1b gezeigt ist, ist als Teil einer Gleitringdichtung ausgebildet, wobei in axialer Richtung zu dem Ring ein zweites Bauteil der Gleitringdichtung angeordnet ist, das in Ausgestaltung ebenfalls als Ring ausgebildet ist. Dabei ist die Wirkfläche 2 des hier gezeigten Rings einer Wirkfläche des anderen Bauteils zugewandt, wobei bei einem Betrieb der Gleitringdichtung ein Abstand der Wirkflächen 2 des Rings und des anderen Bauteils variiert wird, wobei es möglich ist, dass die Wirkfläche 2 des hier gezeigten Rings eine Wirkfläche des anderen Bauteils auch berührt. Die Gleitringdichtung und somit der Ring sind weiterhin als Komponenten eines Antriebs, bspw. einer Elektromaschine, zum Antreiben einer Vorrichtung, bspw. eines Fahrzeugs, ausgebildet.

Dabei ist hier vorgesehen, dass für den Fall, dass der Gleitring in der ersten Drehrichtung (Figur 1a) gedreht wird, die als Fahrzeug ausgebildete Vorrichtung vorwärts bewegt wird und somit vorwärts fährt. In diesem Fall wird die Flüssigkeit relativ zu der Wirkfläche 2 des Rings radial von innen nach außen transportiert, wobei durch die Struktur der Oberfläche der Innenzone 8 der Wirkfläche 2, die durch den Laser bereitgestellt ist, eine Pumpwirkung erzeugt wird. Weiterhin wird durch die mit dem Laser bereitgestellte Struktur der Oberfläche der Außenzone 10 der Wirkfläche 2 für die Flüssigkeit eine Barrierewirkung erzeugt.

Falls der Ring dagegen in der zweiten Drehrichtung (Figur 1b) gedreht wird, wird das Fahrzeug rückwärts bewegt. In diesem Fall wird die Flüssigkeit in radialer Richtung relativ zu der Wirkfläche 2 des Rings von außen nach innen gefördert. Dabei wird durch die mit dem Laser bereitgestellte Struktur der Oberfläche der Außenzone 10 der Wirkfläche 2 für die Flüssigkeit eine Pumpwirkung erzeugt. Außerdem wird durch die mit dem Laser bereitgestellte Struktur der Oberfläche der Innenzone 8 der Wirkfläche 2 des Rings eine Barrierewirkung erzeugt.

Bei der hier vorgestellten Ausführungsform weisen Strukturen der Oberfläche der Innenzone 8 und der Außenzone 10 jeweils ein spiralförmiges Muster auf. Dabei sind einzelne Spiralen bzw. Furchen oder Nuten der Struktur der Oberfläche der Innenzone 8 durch den Laser im Uhrzeigersinn von innen nach außen strukturiert bzw. geformt, wohingegen einzelne Spiralen bzw. Furchen oder Nuten der Struktur der Oberfläche der Außenzone 10 durch den Laser entgegen dem Uhrzeigersinn von innen nach außen strukturiert bzw. geformt sind.

## Patentansprüche

1. Ring für eine Gleitringdichtung, der eine Wirkfläche (2) aufweist, wobei die Wirkfläche (2) eine Innenzone (8) mit einer Oberfläche und eine Außenzone (10) mit einer Oberfläche aufweist, wobei die Außenzone (10) die Innenzone (8) koaxial umschließt, wobei jede der beiden Oberflächen eine mit einem Laser bereitgestellte Struktur aufweist, **dadurch gekennzeichnet dass** die jeweilige Struktur der jeweiligen Oberfläche der Innenzone (8) und der Außenzone (10) jeweils ein spiralförmiges Muster aufweist, wobei einzelne Spiralen der Struktur der Oberfläche der Innenzone (8) im Uhrzeigersinn von innen nach außen geformt sind, wobei einzelne Spiralen der Struktur der Oberfläche der Außenzone (10) entgegen dem Uhrzeigersinn von innen nach außen geformt sind.

2. Ring nach Anspruch 1, für den eine erste Drehrichtung und eine zweite Drehrichtung vorgesehen ist, die zueinander entgegengesetzt sind, wobei für den Fall, dass der Ring in der ersten Drehrichtung im Uhrzeigersinn gedreht wird, eine Flüssigkeit radial von innen nach außen gefördert wird, wobei die Innenzone (8) der Wirkfläche (2) des Rings dazu ausgebildet ist, für die Flüssigkeit eine Pumpwirkung zu erzeugen, wobei die Außenzone (10) der Wirkfläche (2) des Rings dazu ausgebildet ist, für die Flüssigkeit eine Barrierewirkung zu erzeugen, wobei für den Fall, dass der Ring in der zweiten Drehrichtung entgegen dem Uhrzeigersinn gedreht wird, die Flüssigkeit radial von außen nach innen gefördert wird, wobei die Außenzone (10) der Wirkfläche (2) des Rings dazu ausgebildet ist, für die Flüssigkeit eine Pumpwirkung zu erzeugen, wobei die Innenzone (8) der Wirkfläche (2) des Rings dazu ausgebildet ist, für die Flüssigkeit eine Barrierewirkung zu erzeugen.

3. Ring nach Anspruch 1 oder 2, der für eine Gleitringdichtung vorgesehen ist, die als Teil eines Antriebs für eine Vorrichtung ausgebildet ist.

4. Ring nach Anspruch 3, der in der ersten Drehrichtung drehbar ist, wenn die Vorrichtung vorwärts bewegt wird, und der in der zweiten Drehrichtung drehbar ist, wenn die Vorrichtung rückwärts bewegt wird.

5. Ring nach einem der Ansprüche 2 bis 4, für den vorgesehen ist, dass eine erste maximale Drehzahl in der ersten Drehrichtung größer als eine zweite maximale Drehzahl in der zweiten Drehrichtung ist.

6. Ring nach einem der voranstehenden Ansprüche, der als Gleitring oder als Dichtring der Gleitringdichtung ausgebildet ist.

7. Gleitringdichtung, die mindestens einen Ring nach einem der voranstehenden Ansprüche aufweist.

8. Gleitringdichtung nach Anspruch 7, die zwei Ringe aufweist, wobei mindestens einer der beiden Ringe nach einem der Ansprüche 1 bis 6 ausgebildet ist.

9. Gleitringdichtung nach Anspruch 8, bei der beide Ringe jeweils eine Wirkfläche (2) aufweisen, die einander zugewandt sind und bei einem Betrieb der Gleitringdichtung zusammenwirken.

10. Gleitringdichtung nach Anspruch 8 oder 9, bei der mindestens einer der beiden Ringe an einer Welle eines Antriebs anordenbar ist, wobei die Gleitringdichtung dazu ausgebildet ist, die Welle abzudichten.

## Claims

1. Ring for a floating ring seal, which has an active surface (2), wherein the active surface (2) has an inner zone (8) with a surface and an outer zone (10) with a surface, wherein the outer zone (10) coaxially surrounds the inner zone (8), wherein each of the two surfaces has a structure provided with a laser, **characterised in that** the respective structure of the respective surface of the inner zone (8) and the outer zone (10) has a spiral pattern, wherein individual spirals of the structure of the surface of the inner zone (8) are formed clockwise from the inside to the outside, wherein individual spirals of the structure of the surface of the outer zone (10) are formed anticlockwise from the outside to the inside.

2. Ring according to claim 1, for which a first direction of rotation and a second direction of rotation is provided, which are opposite to each other, wherein in the case where the ring is rotated clockwise in the first direction of rotation, a liquid is conveyed radially from the inside to the outside, wherein the inner zone (8) of the active surface (2) of the ring is designed to create a pumping effect for the liquid, wherein the outer zone (10) of the active surface (2) of the ring is designed to create a barrier effect for the liquid, wherein in the case where the ring is rotated anticlockwise in the second direction of rotation, the liquid is conveyed radially from the outside to the inside, wherein the outer zone (10) of the active surface (2) of the ring is designed to create a pumping effect for the liquid, wherein the inner zone (8) of the active surface (2) of the ring is designed to create a barrier effect for the liquid.

3. Ring according to claim 1 or 2, which is intended for a floating ring seal which is designed as part of a drive for a device.

4. Ring according to claim 3, which is rotatable in the first direction of rotation when the device is moved forwards, and which is rotatable in the second direction of rotation when the device is moved backwards.

5. Ring according to any of claims 2 to 4, for which it is provided that a first maximum rotational speed in the first direction of rotation is greater than a second maximum rotational speed in the second direction of rotation.

6. Ring according to any of the preceding claims, which is designed as a floating ring or as a sealing ring of the floating ring seal.

7. Floating ring seal, which has at least one ring according to any of the preceding claims.

8. Floating ring seal according to claim 7, which has two rings, wherein at least one of the two rings is designed according to any of claims 1 to 6.

9. Floating ring seal according to claim 8, where the two rings each have an active surface (2), said active surfaces facing one another and interacting during an operation of the floating ring seal.

10. Floating ring seal according to claim 8 or 9, where at least one of the two rings can be arranged on a shaft of a drive, wherein the floating ring seal is designed to seal off the shaft.

## Revendications

1. Bague pour un joint d'étanchéité à bague de glissement, qui présente une surface active (2), dans laquelle la surface active (2) présente une zone intérieure (8) avec une surface et une zone extérieure (10) avec une surface, dans laquelle la zone extérieure (10) entoure la zone intérieure (8) de manière coaxiale, dans laquelle chacune des deux surfaces présente une structure obtenue avec un laser, **caractérisée en ce que** la structure respective de la surface respective de la zone intérieure (8) et de la zone extérieure (10) présente respectivement un motif en forme de spirale, dans laquelle des spirales individuelles de la structure de la surface de la zone intérieure (8) sont formées de l'intérieur vers l'extérieur dans le sens horaire, dans laquelle des spirales individuelles de la structure de la surface de la zone extérieure (10) sont formées de l'intérieur vers l'extérieur dans le sens antihoraire.

2. Bague selon la revendication 1, pour laquelle une première direction de rotation et une seconde direction de rotation est prévue, qui sont opposées l'une à l'autre, dans laquelle, au cas où la bague serait amenée en rotation dans la première direction de rotation dans le sens horaire, un liquide est refoulé radialement de l'intérieur vers l'extérieur, dans laquelle la zone intérieure (8) de la surface active (2) de la bague est réalisée pour produire un effet de pompage pour le liquide, dans laquelle la zone extérieure (10) de la surface active (2) de la bague est réalisée pour produire un effet barrière pour le liquide, dans laquelle, au cas où la bague serait amenée en rotation dans la seconde direction de rotation dans le sens antihoraire, le liquide est refoulé radialement de l'extérieur vers l'intérieur, dans laquelle la zone extérieure (10) de la surface active (2) de la bague est réalisée pour produire un effet de pompage pour le liquide, dans laquelle la zone intérieure (8) de la surface active (2) de la bague est réalisée pour produire un effet barrière pour le liquide.

3. Bague selon la revendication 1 ou 2, qui est prévue pour un joint d'étanchéité à bague de glissement, qui est réalisé comme partie d'un entraînement pour un dispositif.

4. Bague selon la revendication 3, qui peut être amenée en rotation dans la première direction de rotation, lorsque le dispositif est déplacé vers l'avant, et qui peut être amenée en rotation dans la seconde direction de rotation, lorsque le dispositif est déplacé vers l'arrière.

5. Bague selon l'une quelconque des revendications 2 à 4, pour laquelle il est prévu qu'une première vitesse maximale dans la première direction de rotation soit supérieure à une seconde vitesse maximale dans la seconde direction de rotation.

6. Bague selon l'une quelconque des revendications précédentes, qui est réalisée en tant que bague de glissement ou en tant que bague d'étanchéité du joint d'étanchéité à bague de glissement.

7. Joint d'étanchéité à bague de glissement, qui présente au moins une bague selon l'une quelconque des revendications précédentes.

8. Joint d'étanchéité à bague de glissement selon la revendication 7, qui présente deux bagues, dans lequel au moins une des deux bagues est réalisée selon l'une quelconque des revendications 1 à 6.

9. Joint d'étanchéité à bague de glissement selon la revendication 8, où les deux bagues présentent respectivement une surface active (2), qui sont tournées l'une vers l'autre et coopèrent lors d'un fonctionnement du joint d'étanchéité à bague de glissement.

10. Joint d'étanchéité à bague de glissement selon la revendication 8 ou 9, où au moins une des deux bagues peut être disposée sur un arbre d'un entraînement, dans lequel le joint d'étanchéité à bague de glissement est réalisé pour étanchéifier l'arbre.
